# EUROPÄISCHE PATENTSCHRIFT

(11) **EP 1 485 738 B1**
(45) Veröffentlichungstag und Bekanntmachung des Hinweises auf die Patenterteilung: **31.05.2006**
(21) Anmeldenummer: 03727144.2
(22) Anmeldetag: 21.03.2003
(51) Int. Cl.: G02B 6/255

(54) **VERFAHREN UND VORRICHTUNG ZUM SPLEISSEN VON LICHTWELLENLEITERN**
METHOD AND DEVICE FOR SPLICING OPTICAL WAVEGUIDES
PROCEDE ET DISPOSITIF D'EPISSURAGE DE FIBRES OPTIQUES

(30) Priorität: 21.03.2002 DE 10212716
(43) Veröffentlichungstag der Anmeldung: 15.12.2004
(73) Patentinhaber: CCS Technology, Inc., Wilmington, DE 19803 (US)
(72) Erfinder: RUEGENBERG, Gervin, 80689 München (DE)
(74) Vertreter: Epping - Hermann - Fischer
(86) Internationale Anmeldenummer: PCT/DE2003/000949
(87) Internationale Veröffentlichungsnummer: WO 2003/081308

(56) Entgegenhaltungen:
- EP-A- 0 234 325
- EP-A- 0 505 044
- EP-A- 0 895 103
- EP-A- 1 136 855
- EP-A- 1 174 740
- EP-B- 0 423 994
- WO-A-01/74527

## Beschreibung

Die Erfindung betrifft ein Verfahren zum Spleißen von Lichtwellenleitern gemäß dem Oberbegriff des Anspruchs 1. Weiterhin betrifft die Erfindung eine Vorrichtung zum Spleißen von Lichtwellenleitern gemäß dem Oberbegriff des Anspruchs 7.

Die Erfindung betrifft das thermische Spleißen von Lichtwellenleitern. Heutige Spleißgeräte benutzen in der Regel eine elektrische Glimmentladung als Energiequelle für den Spleißvorgang. Während des Spleißvorgangs befinden sich die zu verspleißenden Lichtwellenleiter in einer Einflusszone dieser Glimmentladung und werden dadurch auf Schmelztemperatur erwärmt. Für die Qualität der erreichten Spleißverbindung sind, neben anderen Parametern, sowohl die Intensität der Erwärmung der Lichtwellenleiter als auch die Größe der Erwärmungszone von Bedeutung. Diese beiden Parameter können jedoch bei auf dem Prinzip der Glimmentladung beruhenden Spleißgeräten nicht unabhängig voneinander gesteuert werden. Als wesentliche Steuerparameter stehen nämlich bei diesen Spleißgeräten der Strom, mit dem die Glimmentladung betrieben wird, und der Abstand der Spleißelektroden zur Verfügung. Ein höherer Strom hat zwangsläufig eine größere Ausdehnung der Glimmentladung zur Folge. Somit vergrößert sich auch die Erwärmungszone. Durch Variation des Elektrodenabstandes kann die Ausdehnung der Erwärmungszone nur geringfügig beeinflusst werden.

Aus dem Dokument US-A-4,263,495 ist ein Verfahren bekannt, bei dem anstelle der Glimmentladung ein Laser als Energiequelle verwendet wird. Bei diesem Verfahren wird eine Fokussierung des Laserstrahls vorgenommen, um eine ausreichende Leistungsdichte zu erhalten. Die Ausdehnung der Erwärmungszone ist bei diesem Verfahren durch die Fokussierungseinstellung vorgegeben.

Die Druckschrift EP-A-0 505 044 betrifft eine Spleißvorrichtung zum Verspleißen von zwei optischen Kabelsegmenten. Lichtstrahlen eines divergierenden konischen Strahlenbündels werden von einem Parabolspiegel reflektiert und auf eine zu verspleißende Stelle zweier Lichtwellenleiter fokussiert. In Abhängigkeit von einem Öffnungswinkel des konischen Strahlenbündels lassen sich die von dem Parabolspiegel reflektierten Strahlen auf unterschiedliche Bereiche entlang einer Längsrichtung der beiden zu verspleißenden Lichtwellenleiter lenken. Der Öffnungswinkel des Strahlenbündels lässt sich durch zwei rotierende Spiegel variabel einstellen. Nach Ende des Spleißvorgangs werden die von dem Parabolspiegel reflektierten Strahlen in Längsrichtung der Lichtwellenleiter über die Spleißstelle geführt, wodurch Verschmutzungen im Bereich der Spleißstelle entfernt werden und die Spleißstelle gleichzeitig poliert wird.

Die Druckschrift EP-A-0 234 325 beschreibt einen Multimodenkoppler sowie ein Verfahren zur Herstellung eines Multimodenkopplers, bei dem zwei Multimodenlichtwellenleiter miteinander verbunden werden. Zur Verbindung der beiden Multimodenlichtwellenleiter werden die beiden Lichtwellenleiter erhitzt. Dabei wird die Verbindungsstelle der beiden Lichtwellenleiter entlang eines keramischen

Heizkörpers hin und her bewegt oder es wird ein Laserstrahl über die Spleißstelle geführt.

Bei heutigen Spleißanwendungen ist es häufig erforderlich, zwei unterschiedliche Fasern miteinander zu verschweißen. Wenn die zu verschweißenden Fasern zum Beispiel stark unterschiedliche Modenfelddurchmesser aufweisen, kommt es - wenn man keine weiteren Maßnahmen ergreift - zu erheblichen Zusatzdämpfungen. Als Gegenmaßnahme kann man bei den aus dem Stand der Technik gekannten Verfahren eine relativ lange Spleißzeit verwenden, um durch Diffusion des Kernmaterials der Lichtwellenleiter eine Angleichung der Modenfelddurchmesser zu erreichen. Dadurch lässt sich zwar eine gewisse Verbesserung erzielen, diese Vorgehensweise bietet aber nicht genügend Freiheitsgrade, um optimale Ergebnisse zu erreichen. Um einen optimalen Spleißprozess zu gewährleisten, muss die Form der Erwärmungszone bzw. das Temperaturprofil entlang der Lichtwellenleiterachse, unabhängig von der aufgebrachten Wärmeleistung völlig frei wählbar sein. Dies ist beim Stand der Technik nicht möglich.

Hiervon ausgehend liegt der vorliegenden Erfindung das Problem zu Grunde, ein neuartiges Verfahren zum Spleißen von Lichtwellenleitern zu schaffen, das es ermöglicht, das Leistungsdichteprofil der Lichtwellenleitererwärmung beliebig zu beeinflussen und damit optimal an die Anforderungen anzupassen. Weiterhin soll eine entsprechende Vorrichtung bereitgestellt werden.

Dieses Problem wird durch ein Verfahren mit den Merkmalen des Anspruchs 1 und durch eine Vorrichtung mit den Merkmalen des Anspruchs 7 gelöst.

Mit Hilfe der Erfindung lassen sich beim Spleißen die Diffusionsvorgänge in den Lichtwellenleitern gezielt steuern. Somit wird ein optimaler Spleißprozess mit Dämpfungswerten nahe des theoretisch erreichbaren Minimums ermöglicht.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Prinzipskizze zur Verdeutlichung des erfindungsgemäßen Verfahrens,
- Fig. 2: Kurven zur Verdeutlichung der Bewegung eines Laserstrahl-Auftreffpunkts auf zu verspleißenden Lichtwellenleitern und Kurven zur Verdeutlichung des sich auf den zu verspleißenden Lichtwellenleitern einstellenden Leistungsdichteprofils der Lichtwellenleitererwärmung,
- Fig. 3: eine Kurve zur Verdeutlichung der Bewegung eines Laserstrahl-Auftreffpunkts mit mehreren Kurven zur Verdeutlichung der Steuerung der Laserleistung und Kurven zur Verdeutlichung des sich auf den zu verspleißenden Lichtwellenleitern einstellenden Leistungsdichteprofils der Lichtwellenleitererwärmung,
- Fig. 4: ein Blockschaltbild einer erfindungsgemäßen Vorrichtung, und
- Fig. 5: einen Auftreffpunkt eines Laserstahls auf zwei miteinander zu verspleißende Lichtwellenleiter in Draufsicht.

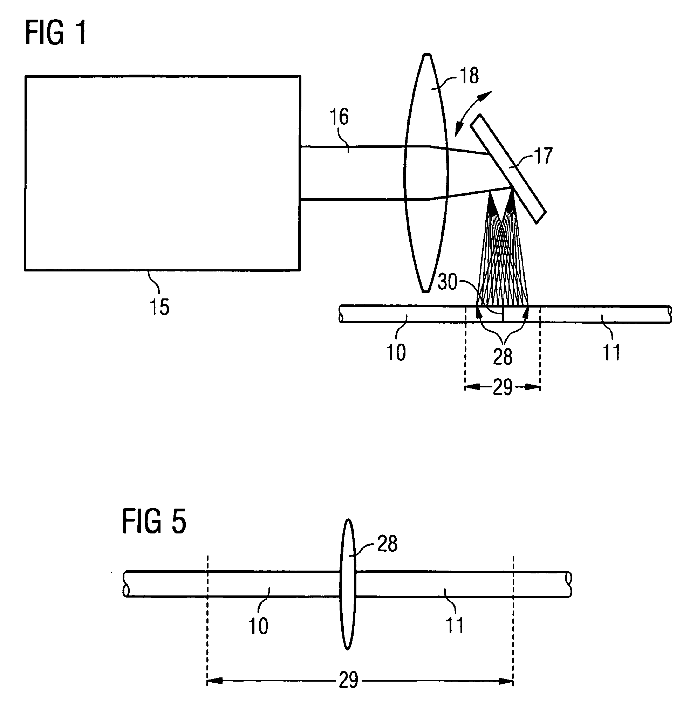

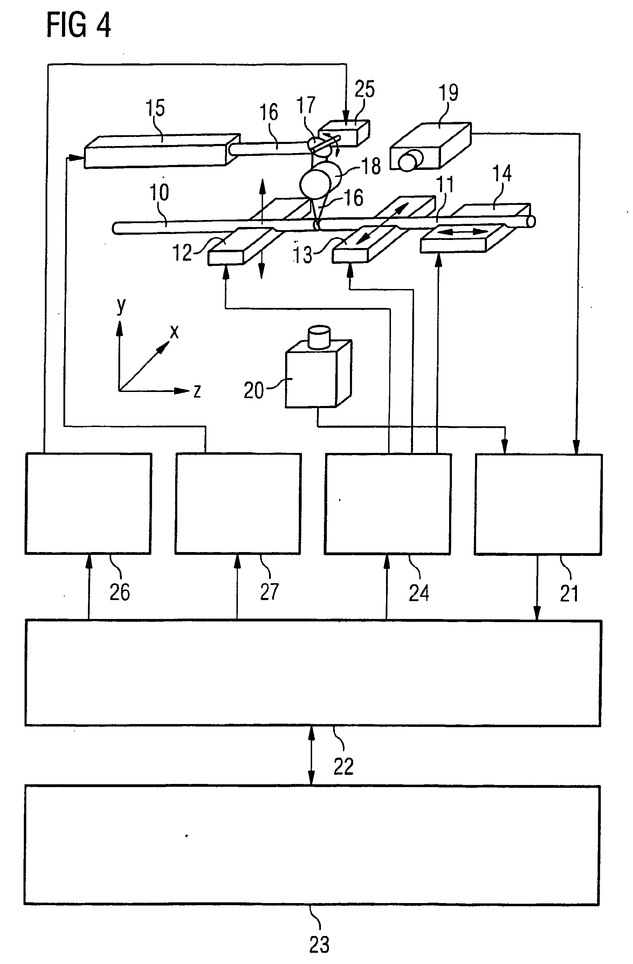

Zunächst wird unter Bezugnahme auf Figuren 4 und 1 der Aufbau der erfindungsgemäßen Vorrichtung zum Spleißen von Lichtwellenleitern erläutert. Gemäß Figur 4 sind zwei miteinander zu verspleißende Lichtwellenleiter 10, 11 auf Positionierelementen 12, 13, 14 angeordnet, die eine räumliche Ausrichtung der Lichtwellenleiter 10, 11 in drei jeweils senkrecht zueinander verlaufenden Achsen ermöglichen. Der Lichtwellenleiter 11 ist auf den Positionierelementen 13, 14 angeordnet, die den Lichtwellenleiter 11 in einer in etwa horizontal verlaufenden, von der x-Achse sowie z-Achse aufgespannten Ebene verschieben können. Der andere Lichtwellenleiter 10 ist auf dem Positionierelement 12 angeordnet. Über das Positionierelement 12 ist der Lichtwellenleiter 10 in der y-Achse verschiebbar, die senkrecht zu der x-Achse und z-Achse verläuft. Hierdurch lassen sich die miteinander zu verspleißenden Lichtwellenleiter 10, 11 für den Spleißvorgang exakt zueinander ausrichten.

Als Energiequelle für den Spleißvorgang ist ein Laser 15 vorgesehen, der einen Laserstrahl 16 ausstrahlt. Der Laserstrahl 16 trifft auf einen Spiegel 17 und wird so in Richtung auf die zu verspleißenden Lichtwellenleiter 10, 11 gelenkt. An Stelle des Spiegels 17 können auch andere bewegliche optische Komponenten verwendet werden. Es kommen nicht-rotationssymmetrische optische Bauteile, wie zum Beispiel transparente Prismen oder Quader, in Betracht.

Zur Fokussierung des Laserstrahls 16 ist eine Linse 18 vorgesehen, die im Strahlengang des Laserstrahls entweder dem Spiegel 17 nachgeordnet (Figur 4) oder dem Spiegel vorgeordnet ist (Figur1). Als Laser 15 kommt vorzugsweise ein CO2-Laser zum Einsatz.

Die Position der miteinander zu verspleißenden Lichtwellenleiter 10, 11 und der Spleißvorgang werden von Kameras 19, 20 überwacht. Die Kameras 19, 20 leiten die ermittelten Signale an eine Erfassungseinrichtung 21 weiter, welche die Signale auswertet und an eine Zentralsteuereinrichtung 22 weiterleitet. Die Zentralsteuereinrichtung 22 ist ihrerseits mit einer Bedien- und Anzeigeeinrichtung 23 verbunden, damit der Benutzer den Spleißvorgang überwachen und durch Eingabe von Steuerbefehlen bzw. Spleißparametern ggf. beeinflussen kann.

Die Zentralsteuereinrichtung 22 dient der Steuerung bzw. Regelung des gesamten Spleißvorgangs. Sie verarbeitet die von der Erfassungseinrichtung 21 weitergeleiteten Daten. Ist zum Beispiel eine Veränderung der räumlichen Ausrichtung der miteinander zu verspleißenden Lichtwellenleiter 10, 11 erforderlich, so gibt die Zentralsteuereinrichtung 22 Steuersignale an eine Lagesteuereinrichtung 24 weiter, die mit allen drei Positionierelementen 12, 13, 14 verschaltet ist. Hierdurch erfolgt dann eine Veränderung der räumlichen Ausrichtung der miteinander zu verspleißenden Lichtwellenleiter 10, 11.

Zur Gewährleistung eines optimalen Spleißprozesses muss das Temperaturprofil bzw. das Leistungsdichteprofil entlang der Achse der Lichtwellenleiter 10, 11, unabhängig von der aufgebrachten Leistung des Lasers 15 völlig frei wählbar sein. Hierzu ist dem Spiegel 17 eine Antriebseinrichtung 25 zugeordnet, mit Hilfe derer der Spiegel 17 in seiner Position verändert werden kann. Gemäß Figuren 1 und 4 ist der Spiegel 17 schwenkbar. Zur Steuerung der Schwenkbewegung des Spiegels 17 ist der Antriebseinrichtung 25 eine Antriebsteuerungseinrichtung 26 zugeordnet. Die Antriebsteuerungseinrichtung 26 ist mit der Zentralsteuereinrichtung 22 verschaltet. Weiterhin ist eine Lasersteuereinrichtung 27 vorhanden, mit Hilfe derer die Leistung des Lasers 15 beeinflusst werden kann. Die Lasersteuereinrichtung 27 ist einerseits mit der Zentralsteuereinrichtung 22 und andererseits mit dem Laser 15 verschaltet.

Erfindungsgemäß werden die Kurvenform der Spiegelbewegung Ω und die Laserleistung L moduliert.

Das erfindungsgemäße Verfahren zum Spleißen der Lichtwellenleiter 10, 11 1 wird nachfolgend unter Bezugnahme auf die Zeichnungen 1 bis 3 in größerem Detail beschrieben:

Erfindungsgemäß wird ein Auftreffpunkt 28 des Laserstrahls 16 auf die zu verspleißenden Lichtwellenleiter 10, 11 in Längsrichtung der zu verspleißenden Lichtwellenleiter 10, 11 verändert. Dies ist insbesondere in Figur 1 verdeutlicht. Der Auftreffpunkt 28 wird dabei in einem vorbestimmten Bereich 29 um eine Spleißstelle 30 der zu verspleißenden Lichtwellenleiter 10, 11 herum verschoben. Vorzugsweise wird der Auftreffpunkt 28 in dem vorbestimmten Bereich 29 periodisch verschoben, wobei eine Frequenz für das Verschieben des Auftreffpunkts 28 auf den zu verspleißenden Lichtwellenleiter 10, 11 derart bemessen ist, dass eine Periodendauer für das Verschieben des Auftreffpunkts 28 wesentlich kürzer ist als die thermische Zeitkonstante der zu verspleißenden Lichtwellenleiter 10, 11.

In diesem Zusammenhang ist von Bedeutung, dass die Fokussierung des Laserstrahls 16 derart erfolgt, dass sich ein relativ schmaler Auftreffpunkt 28 und damit eine relativ schmale Erhitzungszone auf den Lichtwellenleitern 10, 11 einstellt. Der Auftreffpunkt 28 darf nicht breiter als die kleinste zum Spleißen zweckmäßige Erhitzungszone sein. Eine zweckmäßige Breite des Auftreffpunkts 28 liegt zwischen 20µm und 100µm. Weiterhin erfolgt die Fokussierung vorzugsweise derart, dass sich in der Lichtwellenleiterebene ein länglicher Auftreffpunkt 28 ergibt, der quer zur Achse der Lichtwellenleiter 10, 11 eine größere Ausdehnung als längs zur Achse aufweist (siehe Figur 5). Anstelle eines runden Auftreffpunkts 28 ergibt sich so beispielsweise ein linienförmiger oder elliptischer Auftreffpunkt 28. Hierdurch wird eine übermäßige lokale Erwärmung der Lichtwellenleiter 10, 11 vermieden. Weiterhin können Toleranzen zwischen der Position der Lichtwellenleiter 10, 11 und der Lage des Auftreffpunkts 28 ausgeglichen werden. Die gewünschte Form des Auftreffpunkts 28 kann durch Verwendung von Zylinderiinsen oder entsprechende Linsenkombinationen erreicht werden. Die optimale Breite des Auftreffpunkts 28 ergibt sich aus den o.g. Forderungen bezüglich der Breite der Erwärmungszone. Die Höhe des Auftreffpunkts 28 sollte so gewählt werden, dass die zu erwartenden mechanischen Toleranzen sicher abgedeckt werden, d.h. es muss vermieden werden, dass die Lichtwellenleiter 10, 11 am Rand des Auftreffpunkts 28 oder gar außerhalb liegen.

Wie bereits erwähnt, erfolgt die Bewegung des Spiegels 17 periodisch und mit einer Periodendauer, die weit kürzer ist als die thermische Zeitkonstante der Faser. Dadurch wird sichergestellt, dass die Lichtwellenleiter im gesamten Bewegungsbereich des Auftreffpunktes quasi gleichzeitig erwärmt wird. Eine bevorzugte Frequenz für die Bewegung des Spiegels 17 liegt zwischen 50Hz und 500Hz. Zur Steuerung des Leistungsdichteprofils wird die Bewegung des Spiegels 17 bzw. des Auftreffpunkts 28 in Kombination mit der Leistung des Lasers 15 bzw. des Laserstrahls 16 moduliert.

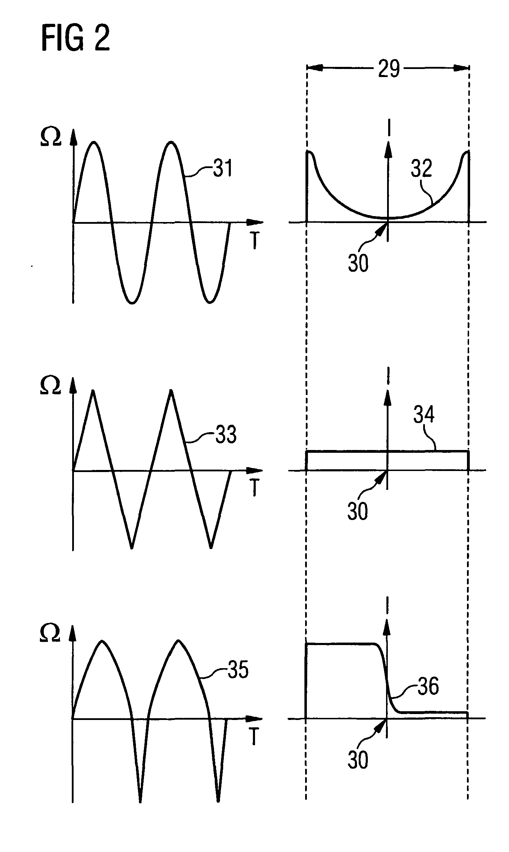

Zur Modulation der Bewegung bzw. der Geschwindigkeit der Bewegung des Spiegels 17 bzw. des Auftreffpunkts 28 wird die Antriebseinrichtung 25 des Spiegels 17 mit einer Kurvenform angesteuert, die für das gewünschte Erwärmungsprofil bzw. Leistungsdichteprofil sorgt. Die Leistung des Lasers 15 wird dabei vorzugsweise konstant gehalten. In Bereichen mit langsamer Bewegung des Spiegels 17 wirkt im Mittel ein höherer Anteil der Laserleistung als in Bereichen mit schneller Bewegung desselben. Daher werden in diesen Bereichen die Lichtwellenleiter stärker erwärmt. Figur 2 zeigt dies anhand von drei Beispielen. Bei einer sinusförmigen Bewegung Ω des Spiegels 17 über der Zeit T gemäß Kurve 31 ist bei konstanter Leistung des Lasers 15 die Leistungsdichte an den Rändern der Bewegung im Bereich 29 am größten, weil dort wegen der Umkehr der Bewegungsrichtung die Bewegung des Spiegels 17 am langsamsten ist. Als Intensitätsprofil I der mittleren Laserleistung ergibt sich die in der Kurve 32 dargestellte "Badewannenkurve". Das zweite Beispiel zeigt in der Kurve 33 eine dreiecksförmige Bewegung Ω des Spiegels 17. Dies führt bei wiederum konstanter Leistung des Lasers 15 zu einem gleichmäßigen Intensitätsprofil I über der Achse der miteinander zu verspleißenden Lichtwellenleiter 10, 11 - siehe Kurve 34 in Figur 2. Im dritten Beispiel - siehe Kurven 35 und 36 - ist gezeigt, wie durch eine entsprechende Modulation der Spiegelbewegung Ω ein willkürlich gewähltes Intensitätsprofil I erreicht wird. Ein linker Lichtwellenleiter wird hier deutlich stärker erwärmt als der rechte Lichtwellenleiter, weil in diesem Bereich die Spiegelbewegung langsamer ist. Ein solches unsymmetrisches Intensitätsprofil I ist insbesondere dann vorteilhaft, wenn die beiden miteinander zu verspleißenden Lichtwellenleiter 10, 11 unterschiedliche Eigenschaften, z.B. stark unterschiedliche Außendurchmesser, aufweisen. Zur Modulation der Bewegung des Auftreffpunkts 38 wird demnach bei einer vorgegebenen konstanten Frequenz für das Verschieben des Auftreffpunkts 38 ein Kurvenverlauf der Bewegung des Auftreffpunkts 38 bzw. des Spiegels 17 verändert.

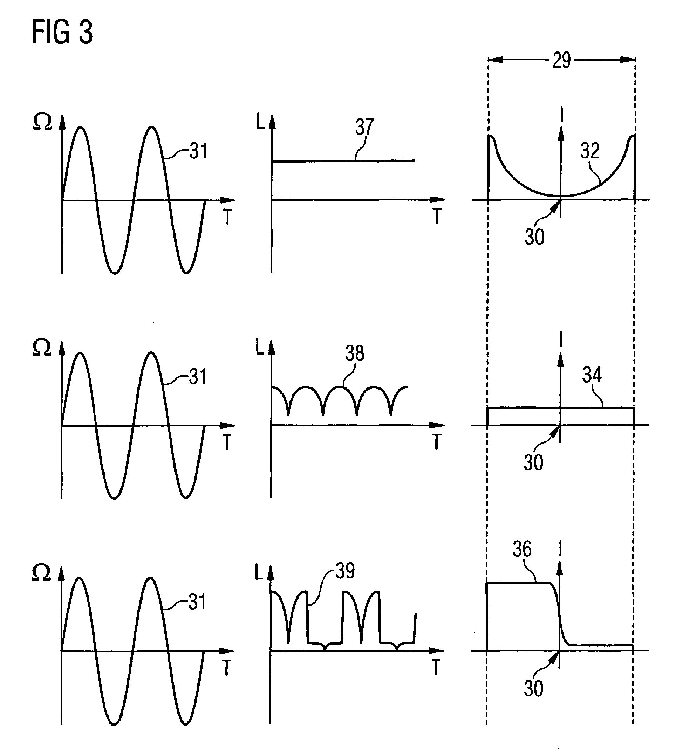

Zur Modulation der Intensität des Laserstrahls 16 wird die Leistung L des Lasers 15 verändert. Die Modulation des Lasers 15 erfolgt hierbei synchron zur Bewegung Ω des Spiegels. Die Antriebseinrichtung 25 des Spiegels 17 wird mit einer konstanten Kurvenform (z.B. Sinus) und der oben genannten Grundfrequenz betrieben. Die Leistung L des Lasers 15 wird synchron dazu gesteuert bzw. geregelt, so dass sich das gewünschte Leistungsdichteprofil 1 ergibt. Figur 3 zeigt hierzu wieder drei Beispiele. Der Spiegel 17 wird in diesen Beispielen gemäß Kurven 31 sinusförmig bewegt , da dies technisch am einfachsten zu realisieren ist. In den Beispielen gemäß Figur 3 werden die gleichen Leistungsdichteprofile 32, 34, 36 realisiert wie in den Beispielen gemäß Figur 2. Bei konstanter Laserleistung L - Kurve 37 - ergibt sich für das Leistungsdichteprofil 1 wieder die o.g. "Badewannenkurve". Im zweiten Beispiel wird die Laserleistung L gemäß Kurve 38 so moduliert, dass sie gerade die Geschwindigkeitsunterschiede der Bewegung Ω des Spiegels 17 kompensiert. Hierdurch ergibt sich wieder ein konstantes Leistungsdichteprofil I. Im dritten Beispiel ist dies genauso, jedoch wird zusätzlich im linken Teil der Spiegelbewegung eine höhere Laserleistung L - Kurve 39 - gewählt als im rechten Teil. Dadurch wird der linke Lichtwellenleiter stärker erwärmt als die rechte Lichtwellenleiter.

Durch die gezeigte Anordnung ist es demnach möglich, das Leistungsdichteprofil I der auf die Lichtwellenleiter 10, 11 auftreffenden Laserstrahlung nahezu beliebig zu steuern. Dadurch kann das Temperaturprofil während des Spleißvorgangs so eingestellt werden, wie dies für optimale Dämpfung erforderlich ist. So wird ein optimaler Spleißprozess mit geringst möglichen Dämpfungswerten erreicht. Die Steuerung des Temperaturprofils über die Modulation der Intensität des Laserstrahls bietet gegenüber der Steuerung über die Kurvenform der Bewegung den Vorteil, dass an die Antriebseinrichtung 25 des Spiegels 17 sehr viel geringere Anforderungen gestellt werden können. So ist beispielsweise eine dreieckförmige Spiegelbewegung gemäß Kurve 33 technisch schwierig und nur näherungsweise realisierbar.

Die Bewegung des Laserstrahls 16 wird in den gezeigten Beispielen mit einem periodisch bewegten Spiegel 17 - einem sogenannten Galvanometerscanner - bewerkstelligt. Stattdessen kann auch ein Polygonscanner verwendet werden. Dabei handelt es sich um einen rotierenden Spiegel mit mehreren, regelmäßig angeordneten Spiegelflächen (z.B. Seitenkanten eines Sechsecks). Dieses ermöglicht eine hohe Geschwindigkeit der Bewegung des Laserstrahls 16 , da keine Bewegungsumkehr erforderlich ist. In diesem Fall kann dann die Steuerung des Intensitätsprofils 1 vorzugsweise über die Modulation der Laserleistung L bewerkstelligt werden.

Das erfindungsgemäße Verfahren kann in gleicher Weise auch zum gleichzeitigen Spleißen mehrerer zu einem Bändchen zusammengefasster Lichtwellenleiter (sogenannte ribbon) verwendet werden. In diesem Fall ist der Leuchtfleck so gestaltet, dass derselbe die Breite des gesamten Bändchens abdeckt. Hierzu gibt es zwei Möglichkeiten: Nach einer ersten Möglichkeit wird ein zusätzliches Hin -und Herbewegen des Laserstahls quer zur Achse der Lichtwellenleiter durchgeführt. Hierzu ist im einfachsten Fall ein zweiter beweglicher Spiegel, vorzugsweise ein Polygonscanner, vorgesehen. Dadurch kann die Bewegungsfrequenz für eine zweite Bewegungsachse sehr viel höher gewählt werden als für eine erste Achse. Dadurch wird vermieden, dass die Überlagerung der beiden Bewegungen zu einer unerwünscht ungleichförmigen Wärmeverteilung führt. Nach einer zweiten Möglichkeit wird der Laserstrahl durch eine oder mehrere Zylinderlinsen zu einer Linie aufgeweitet. Der hierdurch erzeugte linienförmige Leuchtfleck muss dann quer zur Faserachse so groß sein, dass im gesamten Bändchen alle Verbindungsstellen gleichmäßig erwärmt werden.

Das erfindungsgemäße Verfahren eignet sich auch besonders gut zum Spleißen von Lichtwellenleitern mit unterschiedlichen Eigenschaften, insbesondere unterschiedlichen Außendurchmessern. In diesem Fall ist die Anwendung eines unsymmetrischen Intensitätsprofils I gemäß Kurve 36 besonderes vorteilhaft.

Das erfindungsgemäße Verfahren kann auch zum Spleißen von Lichtwellenleitern an optische Bauteile ("Chips", z.B. Wellenlängenmultiplexer, Koppler etc.) verwendet werden.

Beim Spleißen von Lichtwellenleitern an optische Bauteile ist sozusagen einer der zu verspleißenden Lichtwellenleiter ein Lichtwellenleiter im optischen Bauteil. Da dieser eine wesentlich größere Wärmekapazität und Wärmeableitung aufweist als der andere Lichtwellenleiter, ist in diesem Fall die Anwendung eines unsymmetrischen Intensitätsprofils I gemäß Kurve 36 von besonderem Interesse. Daher bietet das erfindungsgemäße Verfahren hier besondere Vorteile.

Es ist grundsätzlich möglich, anstelle eines Laserstrahls auch mehrere Laserstrahlen zu verwenden. Hierzu kann beispielsweise der Laserstrahl mittels eines Strahlteilers in zwei Teilstrahlen aufgeteilt werden, die beide auf die Lichtwellenleiter gelenkt werden. In diesem Fall kann die Erfindung in gleicher Weise angewendet werden.

### Bezugszeichenliste

- 10: Lichtwellenleiter
- 11: Lichtwellenleiter
- 12: Positionierelement
- 13: Positionierelement
- 14: Positionierelement
- 15: Laser
- 16: Laserstrahl
- 17: Spiegel
- 18: Linse
- 19: Kamera
- 20: Kamera
- 21: Erfassungseinrichtung
- 22: Zentralsteuereinrichtung
- 23: Bedien- und Anzeigeinrichtung
- 24: Lagesteuereinrichtung
- 25: Antriebseinrichtung
- 26: Antriebssteuereinrichtung
- 27: Lasersteuereinrichtung
- 28: Auftreffpunkt
- 29: Bereich
- 30: Spleißstelle
- 31: Kurve
- 32: Kurve
- 33: Kurve
- 34: Kurve
- 35: Kurve
- 36: Kurve
- 37: Kurve
- 38: Kurve
- 39: Kurve

## Patentansprüche

1. Verfahren zum Spleißen von sich an einem jeweiligen Ende gegenüberliegenden Lichtwellenleitern, wobei mindestens ein Laserstrahl (16) zum thermischen Spleißen von mindestens zwei Lichtwellenleitern (10, 11) auf die Lichtwellenleiter (10, 11) gelenkt wird, bei dem zur Beeinflussung des Leistungsdichteprofils auf den zu verspleißenden Lichtwellenleitern (10, 11) eine Position eines Auftreffpunktes (28) des oder jeden Laserstrahls (16) auf die Lichtwellenleiter (10, 11) in Längsrichtung der zu verspleißenden Lichtwellenleiter (10, 11) verändert wird, wobei der Auftreffpunkt (28) in einem vorbestimmten Bereich (29) um eine Spleißstelle (30) der zu verspleißenden Lichtwellenleiter (10, 11) herum periodisch verschoben wird, **dadurch gekennzeichnet, daß** zur Bereitstellung des Leistungsdichteprofils auf den zu verspleißenden Lichtwellenleitern (10, 11) die Bewegung des Auftreffpunktes (28) und die Intensität des Laserstrahls (16) moduliert werden.

2. Verfahren nach Anspruch 1, **dadurch gekennzeichnet, daß** zur Modulation der Bewegung des Auftreffpunktes (28) bei einer vorgegebenen Frequenz für das Verschieben des Auftreffpunkts (28) ein Kurvenverlauf bzw. die Geschwindigkeit der Bewegung des Auftreffpunkts (28) verändert wird.

3. Verfahren nach Anspruch 1 oder 2, **dadurch gekennzeichnet, daß** zur Modulation der Intensität des Laserstrahls (16) die Leistung des Lasers (15) verändert wird.

4. Verfahren nach einem der Ansprüche 1 bis 3, **dadurch gekennzeichnet, daß** die Modulation der Intensität des Laserstrahls (16) synchron mit der Modulation der Bewegung des Auftreffpunkts (28) erfolgt.

5. Verfahren nach einem der Ansprüche 1 bis 4, **dadurch gekennzeichnet, daß** unterschiedliche Lichtwellenleiter (10, 11) koaxial miteinander verspleißt werden.

6. Verfahren nach einem der Ansprüche 1 bis 5, **dadurch gekennzeichnet, daß** die Form der Erwärmungszone oder das Temperaturprofil entlang der Lichtwellenleiterachsen durch die Modulation der Bewegung des Auftreffpunkts (28) und durch die Modulation der Intensität des Laserstrahls (16) veränderbar ist.

7. Vorrichtung zum Spleißen von sich an einem jeweiligen Ende gegenüberliegenden Lichtwellenleitern mit einem Laser (15) zum thermischen Spleißen von mindestens zwei Lichtwellenleitern (10, 11), mit mindestens einer optischen Komponente, insbesondere einem Spiegel (17), um den oder jeden Laserstrahl (16) auf die zu spleißenden Lichtwellenleiter (10, 11) zu richten, und mit eine Antriebseinrichtung (25) für die oder jede optische Komponente, insbesondere den oder jeden Spiegel (17), wobei mit Hilfe der Antriebseinrichtung (25) die oder jede optische Komponente derart bewegbar ist, daß eine Position eines Auftreffpunktes (28) des oder jeden Laserstrahls (16) auf die zu verspleißenden Lichtwellenleiter (10, 11) in Längsrichtung derselben periodisch verschiebbar ist, **dadurch gekennzeichnet, daß** dem Laser (15) eine Lasersteuereinrichtung (27) zugeordnet ist, bei der die Modulation der Intensität des Laserstrahls (16) in Kombination mit der Beregung der Optischen Komponente erfolgt.

8. Vorrichtung nach Anspruch 7, **dadurch gekennzeichnet, daß** der Antriebseinrichtung (25) für die oder jede bewegliche optische Komponente, insbesondere für den oder jeden Spiegel (17) eine Antriebssteuereinrichtung (26) zur Beeinflussung eines Kurvenverlaufs bzw. einer Geschwindigkeit der Bewegung des Auftreffpunkts (28) zugeordnet ist.

9. Vorrichtung nach Anspruch 7 oder 8, **dadurch gekennzeichnet, daß** mindestens eine Linse (18) zum Fokussieren mindestens eines von dem Laser (15) ausgestrahlten Laserstrahls (16) vorgesehen ist.

10. Vorrichtung nach Anspruch 8 oder 9, **dadurch gekennzeichnet, daß** die Antriebssteuereinrichtung (26) und die Lasersteuereinrichtung (27) an einer Zentralsteuereinrichtung (22) angeschlossen sind.

## Claims

1. Method for splicing optical waveguides whose respective ends are opposite one another, with at least one laser beam (16) being guided onto at least two optical waveguides (10, 11) for thermal splicing of said optical waveguides (10, 11), in which the position of an impact point (28) of the or each laser beam (16) on the optical waveguides (10, 11) is varied in the longitudinal direction of the optical waveguides (10, 11) to be spliced in order to influence the power density profile on the optical waveguides (10, 11) to be spliced, with the impact point (28) being shifted periodically in a predetermined area (29) around the splice point (30) of the optical waveguides (10, 11) to be spliced,
**characterized in that** the movement of the impact point (28) and the intensity of the laser beam (16) are modulated in order to produce the power density profile on the optical waveguides (10, 11) to be spliced.

2. Method according to Claim 1, **characterized in that** a curve profile and/or the speed of the movement of the impact point (28) are/is varied for modulation of the movement of the impact point (28), with a predetermined frequency for the shifting of the impact point (28).

3. Method according to Claim 1 or 2, **characterized in that** the power of the laser (15) is varied for modulation of the intensity of the laser beam (16).

4. Method according to one of Claims 1 to 3,
**characterized in that** the intensity of the laser beam (16) is modulated in synchronism with the modulation of the movement of the impact point (28).

5. Method according to one of Claims 1 to 4,
**characterized in that** different optical waveguides (10, 11) are spliced to one another coaxially.

6. Method according to one of Claims 1 to 5,
**characterized in that** the shape of the heating zone or the temperature profile along the optical waveguide axes can be varied by modulation of the movement of the impact point (28) and by modulation of the intensity of the laser beam (16).

7. Apparatus for splicing optical waveguides whose respective ends are opposite one another, having a laser (15) for thermal splicing of at least two optical waveguides (10, 11), having at least one optical component, in particular a mirror (17) in order to aim the or each laser beam (16) at the optical waveguides (10, 11) to be spliced, and having a drive device (25) for the or each optical component, in particular the or each mirror (17), in which case the or each optical component can be moved with the aid of the drive device (25) in such a way that the position of the impact point (28) of the or each laser beam (16) on the optical waveguides (10, 11) to be spliced can be shifted periodically in their longitudinal direction,
**characterized in that** the laser (15) has an associated laser control device (27), in which the intensity of the laser beam (16) is modulated in conjunction with the movement of the optical component.

8. Apparatus according to Claim 7, **characterized in that** the drive device (25) for the or each moving optical component, in particular for the or each mirror (17) has an associated drive control device (26) for influencing a curve profile and/or a speed of movement of the impact point (28).

9. Apparatus according to Claim 7 or 8, **characterized in that** at least one lens (18) is provided for focusing at least one laser beam (16) which is emitted from the laser (15).

10. Apparatus according to Claim 8 or 9, **characterized in that** the drive control device (26) and the laser control device (27) are connected to a central control device (22).

## Revendications

1. Procédé d'épissurage de fibres optiques se faisant face à une extrémité respective, au moins un faisceau (16) laser étant, pour l'épissurage thermique d'au moins deux fibres (10, 11) optiques, dirigé sur les fibres (10, 11) optiques, dans lequel, pour influer sur le profil de densité de puissance sur les fibres (10, 11) optiques à épisser, on modifie, dans la direction longitudinale des fibres (10, 11) optiques à épisser, une position d'un point (28) d'incidence du ou de chaque faisceau (16) laser sur les fibres (10, 11) optiques, le point (28) d'incidence étant déplacé périodiquement dans une certaine plage (29) déterminée à l'avance autour d'un point (30) d'épissure des fibres (10, 11) optiques à épisser, **caractérisé en ce que**, pour disposer du profil de densité de puissance sur les fibres (10, 11) optiques à épisser, on module le déplacement du point (28) d'incidence et l'intensité du faisceau (16) laser.

2. Procédé suivant la revendication 1, **caractérisé en ce que**, pour la modulation du déplacement du point (28) d'incidence, on modifie, pour une fréquence donnée à l'avance du déplacement du point (28) d'incidence, un tracé de courbe ou la vitesse du déplacement du point (28) d'incidence.

3. Procédé suivant la revendication 1 ou 2, **caractérisé en ce que**, pour la modulation de l'intensité du faisceau (16) laser, on modifie la puissance du laser (15).

4. Procédé suivant l'une des revendications 1 à 3, **caractérisé en ce que** l'on effectue la modulation de l'intensité du faisceau (16) laser en synchronisme avec la modulation du déplacement du point (28) d'incidence.

5. Procédé suivant l'une des revendications 1 à 4, **caractérisé en ce que** l'on épissure coaxialement entre elles des fibres (10, 11) optiques différentes.

6. Procédé suivant l'une des revendications 1 à 5, **caractérisé en ce que** la forme de la zone de réchauffement ou le profil de température le long des axes des fibres optiques peut être modifié par la modulation du déplacement du point (28) d'incidence et par la modulation de l'intensité du faisceau (16) laser.

7. Dispositif d'épissurage de fibres optiques se faisant face à une extrémité respective, comprenant un laser (4) pour l'épissurage thermique d'au moins deux fibres (10, 11) optiques, au moins un composant optique, notamment un miroir (17) pour diriger le ou chaque faisceau (16) laser sur les fibres (10, 11) optiques à épisser et un dispositif (25) d'entraînement du composant optique ou de chaque composant optique, notamment du miroir ou de chaque miroir (17), dans lequel à l'aide du dispositif (25) d'entraînement, le composant optique ou chaque composant optique peut être déplacé de façon à ce qu'une position du point (28) d'incidence du faisceau (16) laser ou de chaque faisceau (16) laser sur les fibres (10, 11) optiques à épisser puisse être déplacée périodiquement dans la direction longitudinale de ces fibres, **caractérisé en ce qu'**il est associé au laser (15) un dispositif (27) de commande de laser, pour lequel la modulation de l'intensité du faisceau (16) laser s'effectue en combinaison avec le déplacement du composant optique.

8. Dispositif suivant la revendication 7, **caractérisé en ce qu'**il associé au dispositif (25) d'entraînement du composant optique mobile ou de chaque composant optique mobile, notamment du miroir (17) ou de chaque miroir (17), un dispositif (26) de commande d' entraînement pour influer sur le tracé de la courbe ou sur une vitesse du déplacement du point (28) d'incidence.

9. Dispositif suivant la revendication 7 ou 8, **caractérisé en ce qu'**il est prévu au moins une lentille (18) pour focaliser au moins un faisceau (16) laser émis par le laser (15).

10. Dispositif suivant la revendication 8 ou 9,
**caractérisé en ce que** le dispositif (26) de commande d'entraînement et le dispositif (27) de commande de laser sont raccordés à un dispositif (22) central de commande.
